# EUROPEAN PATENT SPECIFICATION

(11) **EP 1 038 580 B1**
(45) Date of publication and mention of the grant of the patent: **25.05.2005**
(21) Application number: 99302368.8
(22) Date of filing: 26.03.1999
(51) Int. Cl.: B01J 39/14, C02F 1/58

(54) **Ammonium ion adsorption process using zirconium silicate and zirconium germanate molecular sieves**
Verfahren zur Adsorption von Ammoniumionen unter Verwendung von Zirkoniumsilikat- und Zirkoniumgermanat-Molekularsieben
Procédé d'adsorption d'ions ammonium utilisant des tamis moléculaires à base de silicate de zirconium et germanate de zirconium

(43) Date of publication of application: 27.09.2000
(73) Proprietor: UOP LLC, Des Plaines, IL 60017-5017 (US)
(72) Inventor: Bem, David S., Arlington Heights, Illinois 60004 (US); Sherman, John D., Inverness, Illinois 60050 (US); Napolitano, Amedeo, Des Plaines, Illinois 60016 (US); Leon-Escamilla, Efigenio Alejandro, Arlington Heights, Illinois 60005 (US); Lewis, Gregory J., Mount Prospect, Illinois 60056 (US); Bedard, Robert L., McHenry, Illinois 60050 (US)
(74) Representative: Brock, Peter William

(56) References cited:
- WO-A-91/18833
- WO-A-97/17300
- US-A- 3 723 308
- US-A- 5 015 453
- US-A- 5 518 707
- US-A- 5 888 472
- US-A- 5 891 417
- DATABASE INSPEC [Online] INSTITUTE OF ELECTRICAL ENGINEERS, STEVENAGE, GB CLEARFIELD A ET AL: "On the selectivity regulation of K/sub 2/ZrSi/sub 3/O/sub 9/.H/sub 2/O-type ion exchangers" Database accession no. 6179128 XP002112683 & JOURNAL OF MOLECULAR STRUCTURE, 13 OCT. 1998, ELSEVIER, NETHERLANDS, vol. 470, no. 1-2, pages 207-213, ISSN: 0022-2860

## Description

### FIELD

This invention relates to a novel adsorption use of a new family of crystalline molecular sieves. These molecular sieves have a microporous structure of ZrO₃ octahedral units and at least one of SiO₂ tetrahedral units and GeO₂ tetrahedral units. Optionally the molecular sieve can contain metals such as titanium, niobium, or tin. Methods of preparing these molecular sieves are also disclosed.

### BACKGROUND

Zeolites are crystalline aluminosilicate molecular sieves which have a microporous three-dimensional framework structure. In general, the crystalline zeolites are formed from corner-sharing AlO₂ and SiO₂ tetrahedra and are characterized by having pore openings of uniform dimensions, having a significant ion-exchange capacity, and being capable of reversibly desorbing an adsorbed phase which is dispersed throughout the internal voids of the crystal, without significantly displacing any atoms which make up the permanent crystal structure.

Other crystalline microporous compositions are known which are not zeolitic, i.e., do not contain AlO₂ tetraheda as essential framework constituents, but which exhibit the ion-exchange and/or adsorption characteristics of the zeolites. These include: 1) the crystalline aluminophosphate compositions of US-A-4,310,440; 2) the silicon substituted aluminophosphates of US-A-4,440,871; 3) the metal substituted aluminophosphates of US-A-4,853,197; 4) the metal sulfide molecular sieves of US-A-4,880,761 and 5) the metallo zinc-phosphate compositions disclosed in US-A-5,302,362.

There are also various reports of zirconium silicate molecular sieves. US-A-5,015,453 discloses zirconium, hafnium or titanium silicates containing both octahedral and tetrahedral framework units. In US-A-4,705,675 it is disclosed that metals such as Sc, Ti, V, Cr, Mn, Fe, Co, Ni, Zn, Zr or Y can be inserted into the crystal structure of a zeolite. It is also stated that these metals are introduced as tetrahedral units. Zirconium silicates having the MFI and MEL structures have also been reported in Stud. Surf. Sci. Catal, 83 (Zeolites And Microporous Crystals), 57-66 (1994) and J. of Catalysis, **163**, 501-505 (1996). It is stated in these publications that zirconium is tetrahedral. A zirconium silicate identified as ZRSI-1 is disclosed in US-A-5,338,527.

In contrast to this art, applicants have developed a family of molecular sieves which have octahedral ZrO₃ units, and at least one of tetrahedral SiO₂ and GeO₂ units and an empirical formula on an anhydrous and as synthesized basis of:

AₚMₓZr₁₋ₓSi_{n-y} Ge_{y}Oₘ

where A is an exchangeable cation selected from the group consisting of potassium ion, sodium ion, rubidium ion, cesium ion, or mixtures thereof, M is at least one framework metal selected from the group consisting of hafnium (4+), tin (4+), niobium(5+), titanium (4+), cerium (4+), germanium (4+), praseodymium (4+), and terbium(4+), "p" has a value from 1 to 6, "x" has a value from zero to less than 1, "n" has a value from 2 to 4, "y" has a value from 0 to 4, "m" has a value from 7 to 12. The germanium can substitute for the silicon, zirconium, or both. These compositions have an intracrystalline pore system allowing them to selectively exchange ions. In fact, applicants have determined that this family of molecular sieves can quite surprisingly, selectively exchange ammonium ions in the presence of calcium ions.

### SUMMARY

This invention relates to a novel adsorptive use of a family of molecular sieves, which are crystalline zirconium containing molecular sieves having a microporous framework structure containing ZrO₃ octahedral units and at least one of SiO₂ tetrahedral units and GeO₂ tetrahedral units and an empirical formula on an anhydrous and as synthesized basis of:

AₚMₓZr₁₋ₓSi_{n-y}Ge_{y}Oₘ

where A is an exchangeable cation selected from the group consisting of potassium ion, sodium ion, rubidium ion, cesium ion, or mixtures thereof, M is at least one framework metal selected from the group consisting of hafnium (4+), tin (4+), niobium(5+), titanium (4+), cerium (4+), germanium (4+), praseodymium (4+), and terbium(4+), "p" has a value from 1 to 6, "x" has a value from zero to less than 1, "n" has a value from 2 to 4, "y" has a value from 0 to 4, "m" has a value from 7 to 12 and "x" and "y" are not simultaneously zero, the molecular sieve characterized in that it has pores of less than 7.5 Å. Preferably these molecular sieves have an X-ray powder diffraction pattern which contains the d-spacings and intensities of one of Tables A to G.

The novel adorptive use of the invention is a process for removing ammonium ions from an aqueous stream comprising contacting the stream, at adsorption condition, with a number of the family of molecular sieves characterized herein for a time sufficient to exchange the ammonium ion onto the molecular sieve.

### DETAILED DESCRIPTION

The present invention relates to a novel adsorptive use of a family of crystalline zirconium silicate and zirconium germanate molecular sieves to remove ammonium ions from an aqueous stream. These molecular sieves have a microporous framework structure composed of ZrO₃ octahedral units and at least one of SiO₂ tetrahedral units and GeO₂ tetrahedral units. Further, these molecular sieves have the empirical formula:

AₚMₓZr₁₋ₓSi_{n-y}Ge_{y}Oₘ

where A is an exchangeable cation selected from the group consisting of potassium ion, sodium ion, rubidium ion, cesium ion, or mixtures thereof, M is at least one framework metal selected from the group consisting of hafnium (4+), tin (4+), niobium (5+), titanium (4+), cerium (4+), germanium (4+), praseodymium (4+), and terbium (4+), "p" has a value from 1 to 6, "x" has a value from greater than zero to less than 1, "n" has a value from 2 to 4, "y" has a value from 0 to 4, "m" has a value from 7 to 12. It is of course understood that the quantity (n-y) cannot be negative since a negative mole fraction has no meaning. When "x" is zero and "y" is zero, then the molecular sieve will have a characteristic diffraction pattern represented by one of the patterns set forth in Tables A to G. When "y" is four (4), then one has a zirconium germanate molecular sieve. The M metals which can be inserted into the framework in place of zirconium will be present as MO₃ octahedral units and thus it is a requirement that they are capable of being octahedrally coordinated. The germanium can be inserted into the framework in place of silicon and will be present as MO₂ tetrahedral units. Additionally, germanium can be inserted into the framework as a MO₃ octahedral unit replacing some of the zirconium. That is, germanium can replace some or all of the silicon, some of the zirconium or both the silicon and zirconium.

A preferred process for preparing these molecular sieves is a hydrothermal crystallization of a reaction mixture prepared by combining a reactive source of zirconium, silicon and/or germanium, optionally one or more M metal, at least one alkali metal and water. The alkali metal acts as a templating agent. Any zirconium compound which can be hydrolyzed to zirconium oxide or zirconium hydroxide can be used. Specific examples of these compounds include zirconium alkoxide, e.g., zirconium n-propoxide, zirconium hydroxide, zirconium oxychloride, zirconium chloride, zirconium phosphate and zirconium oxynitrate. The sources of silica include colloidal silica, fumed silica and sodium silicate. The sources of germanium include germanium oxide, germanium alkoxides and germanium tetrachloride. Alkali sources include potassium hydroxide, sodium hydroxide, rubidium hydroxide, cesium hydroxide, sodium carbonate, potassium carbonate, rubidium carbonate, cesium carbonate, sodium halide, potassium halide, rubidium halide, cesium halide, sodium ethylenediamine tetracetic acid (EDTA), potassium EDTA, rubidium EDTA, and cesium EDTA. The M metals sources include the M metal oxides, alkoxides, halide salts, acetate salts, nitrate salts and sulfate salts. Specific examples of the M metal sources include, but are not limited to titanium tetrachloride, titanium trichloride, titanium dioxide, tin tetrachloride, tin isopropoxide, niobium isopropoxide, hydrous niobium oxide, hafnium isopropoxide, hafnium chloride, hafnium oxychloride, cerium chloride, cerium oxide and cerium sulfate.

Generally, the hydrothermal process used to prepare the zirconium silicate and/or germinate molecular sieves used in this invention involves forming a reaction mixture which in terms of molar ratios of the oxides is expressed by the formula:

a A₂O: b MO_{q/2}: 1- b Zr O₂: c SiO₂: d GeO₂: e H₂ O

where "a" has a value from 0.25 to 40, "b" has a value from 0 to 1, "q" is the valence of M, "c" has a value from 0.5 to 30, "d" has a value from 0 to 30 and "e" has a value of 10 to 3000. The reaction mixture is prepared by mixing the desired sources of zirconium, silicon and optionally germanium, alkali metal and optional M metal in any order to give the desired mixture. It is also necessary that the mixture have a basic pH and preferably a pH of at least 8. The basicity of the mixture is controlled by adding excess alkali hydroxide and/or basic compounds of the other constituents of the mixture. Having formed the reaction mixture it is next reacted at a temperature of 100°C to 250°C for a period of 1 to 30 days in a sealed reaction vessel under autogenous pressure. After the allotted time, the mixture is filtered to isolate the solid product which is washed with deionized water and dried in air.

The crystalline molecular sieves used in this invention have a framework structure of octahedral ZrO₃ units, at least one of tetrahedral SiO₂ units and tetrahedral GeO₂ units and optionally octahedral MO₃ units. This framework results in a microporous structure having an intracrystalline pore system with uniform pore diameters, i.e., the pore sizes are crystallographically regular. The diameter of the pores can vary considerably from about 3 Å and larger. In some of the compositions the pores will be less than 8 Å with 7.5 Å or less being especially preferred.

As synthesized, the molecular sieves of this invention will contain some of the alkali metal templating agent in the pores. These metals are described as exchangeable cations meaning that they can be exchanged for other(secondary) cations. Generally, the A exchangeable cations can be exchanged for other alkali metal cations (K⁺, Na⁺, Rb⁺, Cs⁺), alkaline earth cations (Mg²⁺, Ca²⁺, Sr²⁺, Ba²⁺), hydronium ion, ammonium ion or mixtures thereof. The methods used to exchange one cation for another are well known in the art and involve contacting the molecular sieve with a solution containing the desired cation at exchange conditions. Exchange conditions include a temperature of about 25°C to about 100°C and a time of 20 minutes to 2 hours.

The principle adsorptive use of molecular sieves of this invention is in the removal of ammonium ion from an aqueous stream by selective ion exchange of ammonium ions. It is well known that ammonia or ammonium cation is a serious pollutant in water. See US-A-4,344,851 and "Proceedings of the Fifth International Conference on Zeolites", L.V.C. Rees, editor, Heyden Press, pp. 823-831 (1980). The ammonium ion can be removed from the aqueous stream by contacting the stream with the instant zirconium-containing molecular sieve for a time sufficient to exchange the ammonium ions and trap them on the molecular sieve. The contacting can be carried out either in a batch mode or in a continuous mode. In a batch mode, the desired molecular sieve is placed in an appropriate container and the stream to be treated mixed therewith. Contacting is carried out at adsorption conditions including a time of 0.1-100 hr. and a temperature of 25 to 100°C. In a continuous mode, the molecular sieve is placed in a column and the stream to be treated is flowed through it, usually downflow, until the ammonium ion is detected in the effluent of the column. The ammonium ion containing molecular sieve can either be disposed of or it can be regenerated by well known means.

To allow for ready reference, the different structure types of the zirconium silicate molecular sieves and zirconium germanate molecular sieves have been given arbitrary designations of UZSi-1 where the "1" represents a framework of structure type "1". That is, one or more zirconium silicate and/or zirconium germanate molecular sieves with different empirical formulas can have the same structure type.

The X-ray patterns presented in the following examples were obtained using standard X-ray powder diffraction techniques. The radiation source was a high-intensity X-ray tube operated at 45 Kv and 35 ma. The diffraction pattern from the copper K-alpha radiation was obtained by appropriate computer based techniques. Flat compressed powder samples were continuously scanned at 2º (2θ) per minute from 2º to 70º(2θ). Interplanar spacings (d) in Angstrom units were obtained from the position of the diffraction peaks expressed as 2θ where θ is the Bragg angle as observed from digitized data. Intensities were determined from the integrated area of diffraction peaks after subtracting background, "Iₒ" being the intensity of the strongest line or peak, and "I" being the intensity of each of the other peaks.

As will be understood by those skilled in the art, the determination of the parameter 2θ is subject to both human and mechanical error, which in combination can impose an uncertainty of about ±0.4 on each reported value of 2θ. This uncertainty is, of course, also manifested in the reported values of the d-spacings, which are calculated from the θ values. This imprecision is general throughout the art and is not sufficient to preclude the differentiation of the present crystalline materials from each other and from the compositions of the prior art. In some of the X-ray patterns reported, the relative intensities of the d-spacings are indicated by the notations vs, s, m and w which represent very strong, strong, medium, and weak, respectively. In terms of 100 X I/Iₒ, the above designations are defined as w = 0-15; m = 15-60; s = 60-80 and vs = 80-100.

In certain instances the purity of a synthesized product may be assessed with reference to its X-ray powder diffraction pattern. Thus, for example, if a sample is stated to be pure, it is intended only that the X-ray pattern of the sample is free of lines attributable to crystalline impurities, not that there are no amorphous materials present.

The crystalline compositions used in the instant invention may be characterized by their X-ray powder diffraction patterns and such may have one of the X-ray patterns containing the d-spacings and intensities set forth in the following Tables A through G. The intensities are the relative intensities as stated above.

**Table A:**

| **UZSi-1** | |
|---|---|
| d(Å) | I |
| 7.7-8.6 | m |
| 6.3-7.0 | m |
| 5.5-6.3 | s |
| 4.7-5.5 | m |
| 3.2-4.0 | m |
| 2.6-3.4 | vs |

**Table B:**

| **UZSi-2** | |
|---|---|
| d(Å) | I |
| 5.8-6.6 | m |
| 4.2-5.0 | w |
| 3.9-4.6 | m |
| 2.9-3.7 | m |
| 2.5-3.3 | vs |
| 2.3-3.0 | s |

**Table C:**

| **UZSi-6** | |
|---|---|
| d(Å) | I |
| 6.1-6.9 | m |
| 4.4-5.1 | m |
| 3.4-4.2 | m |
| 3.3-4.1 | m |
| 2.3-3.1 | vs |
| 2.2-3.0 | w |

**Table D:**

| **UZSi-7** | |
|---|---|
| d(Å) | I |
| 6.8-7.6 | vs |
| 5.6-6.4 | m |
| 3.7-4.5 | m |
| 3.6-4.4 | m |
| 2.6-3.4 | s-vs |
| 2.5-3.3 | m |
| 2.4-3.2 | vs |

**Table E:**

| **UZSi-8** | |
|---|---|
| d(Å) | I |
| 12.0-13.2 | vs |
| 3.9-4.7 | m |
| 2.8-3.6 | m |
| 2.3-3.1 | m |
| 2.2-3.0 | w |
| 2.1-2.9 | w |

**Table F:**

| **UZSi-9** | |
|---|---|
| d(Å) | I |
| 6.9-7.7 | w |
| 5.9-6.7 | m |
| 5.3-6.1 | s |
| 2.7-3.5 | vs |
| 2.0-2.8 | w |
| 1.6-2.4 | m |
| 1.5-2.3 | m |

**Table G:**

| **UZSi-11** | |
|---|---|
| d(Å) | I |
| 6.0-6.8 | w-m |
| 5.5-6.3 | m |
| 5.4-6.2 | vs |
| 5.2-6.0 | m |
| 2.7-3.5 | s |
| 2.5-3.3 | m |

In order to more fully illustrate the variety of species to be derived from the instant invention, the following examples are set forth.

### Example 1

### UZSi-1

A solution was prepared by mixing 18.02 g of colloidal silica (DuPont Corp. identified as Ludox® AS-40) and 12.89 g ZrOCl₂•8H₂O (Aldrich 98%) in 100.0 g of deionized water. To this solution 56.26 g of 50 wt.% KOH solution was slowly added over a period of 20 minutes. The resulting gel was transferred to a stainless steel blender, homogenized for four minutes, divided into two portions which were transferred to Teflon® lined Parr reactors and hydrothermally reacted for 1 and 7 days at 200°C. The reactors were cooled to room temperature and the mixtures were vacuum filtered to isolate solids which were washed with deionized water and dried in air.

The solid reaction product reacted at 200°C for 1 day, was analyzed and found to contain 21.39 wt%Si, 23.63 wt%Zr, K 19.67 wt% K, LOI 6.48 wt%, which give a formula K_{1.92}ZrSi_{2.94}O_{8.84}•1.5H₂O. The X-ray powder diffraction pattern of this product, which contained no crystalline impurities, was characterized by the data presented in Table 1. The product of the reaction at 7 days had a substantially similar X-ray diffraction pattern to Table 1.

**Table 1**

| 2- θ | d(Å) | I |
|---|---|---|
| 10.85 | 8.15 | m |
| 13.28 | 6.66 | m |
| 15.02 | 5.89 | s |
| 16.44 | 5.39 | w |
| 17.21 | 5.15 | w |
| 18.14 | 4.89 | w |
| 20.10 | 4.41 | m |
| 21.77 | 4.08 | w |
| 24.77 | 3.59 | w |
| 25.10 | 3.55 | m |
| 26.81 | 3.32 | m |
| 28.16 | 3.17 | w |
| 28.80 | 3.10 | w |
| 29.25 | 3.05 | w |
| 29.54 | 3.02 | vs |
| 30.32 | 2.95 | m |
| 30.81 | 2.90 | m |
| 31.05 | 2.88 | m |
| 31.98 | 2.80 | m |
| 33.21 | 2.70 | w |
| 34.38 | 2.61 | w |
| 34.76 | 2.58 | w |
| 35.31 | 2.54 | w |
| 36.83 | 2.44 | w |
| 37.82 | 2.38 | w |
| 38.57 | 2.33 | w |
| 40.10 | 2.25 | w |
| 41.57 | 2.17 | m |
| 43.77 | 2.07 | w |
| 46.25 | 1.96 | w |
| 46.70 | 1.94 | w |
| 48.05 | 1.89 | w |

### Example 2

### Ti-UZSi-2

A solution was prepared by adding 12.03 g KOH to 8.60 g of Ludox® LS-40. To this slurry there were added 0.57 g TiO₂ and 6.90 g ZrOCl₂•8H₂O and stirred. This slurry was mixed for 5 minutes then transferred to a Teflon® lined Parr reactor and heated at 200°C for 7 days. After heating was completed, the reactor was cooled to room temperature and the mixture was vacuum filtered to isolate the solid which was washed with deionized water and dried in air.

The crystalline solid (Ti-UZSi-2) exhibited the powder diffraction pattern of Ti-UZSi-2 as the major phase (>90%) which was characterized by the data in Table 2. Scanning Electron Microscopy (SEM) of a portion of the sample, including EDAX of a crystal indicated the presence of titanium, zirconium, and silicon framework elements.

**Table 2**

| 2-θ | d(Å) | I |
|---|---|---|
| 14.22 | 6.22 | m |
| 19.10 | 4.64 | w |
| 20.82 | 4.26 | m |
| 26.65 | 3.34 | m |
| 30.33 | 2.94 | vs |
| 32.33 | 2.77 | s |
| 42.37 | 2.13 | m |
| 44.90 | 2.02 | w |

### Example 3

### UZSi-6

A reaction mixture of 11.92 g ZrOCl₂•8H₂O and 50 g of deionized water was added drop-wise to a stirring solution of 91.0 g NaOH, 11.45 g fumed silica (Cabot M-5 Cabosil®) and 291.0 g deionized H₂O. The resulting slurry was homogenized in a blender for 3 minutes, divided into several portions, transferred to Teflon® lined Parr reactors and reacted at 150°C for 7 days, 200 °C for 7 days and 225°C for 1 and 7 days. Next the mixtures were vacuum filtered, and the solids were washed with deionized water and dried in air. Chemical analysis of the product obtained from 7days at 225°C indicated the presence of 14.2 wt% Na, 29.8 wt% Zr, 18.8 wt% Si and 10.7 wt% LOI, giving a product of the composition: Na_{1.88}ZrSi_{2.04}O₇•2.02 H₂O. The X-ray powder diffraction pattern of the product showed the major phase (>80%) to be the crystalline sodium zirconium silicate UZSi-6 with a minor impurity phase. The characteristic X-ray diffraction data of the UZSi-6 product are presented in Table 3. The products from the other reaction conditions showed X-ray diffraction patterns substantially the same as the one in Table 3.

**Table 3**

| 2-θ | d(Å) | I |
|---|---|---|
| 13.55 | 6.53 | m |
| 18.77 | 4.72 | m |
| 19.89 | 4.46 | w |
| 20.12 | 4.41 | w |
| 22.72 | 3.91 | w |
| 23.32 | 3.81 | m |
| 23.68 | 3.75 | m |
| 27.89 | 3.20 | w |
| 32.64 | 2.74 | m |
| 32.92 | 2.72 | vs |
| 33.32 | 2.69 | w |
| 33.96 | 2.64 | w |
| 40.80 | 2.21 | w |
| 47.64 | 1.91 | w |
| 48.48 | 1.88 | w |
| 53.60 | 1.71 | w |
| 56.24 | 1.63 | w |
| 58.56 | 1.58 | w |

### Example 4

### UZSi-7

Fumed silica (5.05 g of Cabot M-5 Cabosil®) was slowly added to a stirring solution of 43.33 g Na₂CO₃ and 104 g of deionized H₂O. When the addition was complete, a solution of 12.89 g ZrOCl₂•8H₂O dissolved in 20 g of deionized H₂O was added to the stirring SiO₂/Na₂CO₃ solution over approximately a 25 minute period. The resulting white gel was homogenized in a blender for 4 minutes, divided into two portions, transferred to Teflon® lined Parr reactors and reacted at 200°C and 225°C for 7 days. At the end of the reaction time, the mixtures were vacuum filtered, and the solids were washed with deionized water and dried in air. The X-ray powder diffraction pattern of the product from the reaction at 200°C for 7 days showed the major product (>90 %) to be a crystalline sodium zirconium silicate product UZSi-7. The characteristic X-ray data of UZSi-7 are presented in Table 4. Scanning Electron Microscopy (SEM) of a portion of the sample, including EDAX of a crystal indicated the presence of zirconium, and silicon framework elements. The product from the 225°C for 7 day reaction was found to have substantially the same X-ray diffraction pattern as in Table 4.

**Table 4**

| 2-θ | d(Å) | I |
|---|---|---|
| 12.35 | 7.16 | vs |
| 13.61 | 6.50 | w |
| 14.75 | 6.00 | m |
| 15.38 | 5.76 | w |
| 17.97 | 4.93 | w |
| 18.66 | 4.75 | w |
| 21.59 | 4.11 | m |
| 22.07 | 4.02 | m |
| 23.34 | 3.81 | w |
| 23.63 | 3.76 | m |
| 25.76 | 3.46 | w |
| 27.68 | 3.22 | w |
| 27.92 | 3.19 | m |
| 28.25 | 3.16 | m |
| 29.63 | 3.01 | vs |
| 30.38 | 2.94 | m |
| 31.07 | 2.88 | vs |
| 31.43 | 2.84 | m |
| 32.60 | 2.74 | w |
| 32.99 | 2.71 | m |
| 33.41 | 2.68 | w |
| 36.35 | 2.47 | m |
| 38.15 | 2.36 | w |
| 41.69 | 2.16 | m |
| 42.20 | 2.14 | w |
| 43.85 | 2.06 | w |
| 45.11 | 2.01 | w |
| 47.12 | 1.93 | w |
| 49.67 | 1.83 | w |
| 50.66 | 1.80 | m |

### Example 5

### UZSi-8

A solution of 10.00 g ZrOCl₂•8H₂O dissolved in 108.51 g deionized H₂O was added to a solution of 39.2 g fumed silica (Cabot M-5 Cabosil), 408.43 g 40 wt% TPAOH (Sachem 40 wt%) and 42.32 g NaOH (Aldrich). The resulting white gel was homogenized in a blender for 4 minutes, transferred to a polyethylene bottle and aged at room temperature for 14 days. After aging, the mixture was re-homogenized in a blender for 3 minutes then transferred to a Teflon® lined Parr reactor and reacted for 7 days at 200 °C. The mixture was vacuum filtered, and the solid was washed with deionized water and dried in air. The X-ray powder diffraction pattern of the product showed the majority product to be crystalline sodium zirconium silicate UZSi-8 (Table 5). A chemical analysis of the product indicated the presence of 14.7 wt% Na, 20.2 wt% Zr, 25.2 wt% Si and 16.79 wt% LOI, giving a product of the composition: Na_{2.89}ZrSi_{4.06}O_{11.56}•5.11 H₂O.

**Table 5**

| 2-θ | d(Å) | I |
|---|---|---|
| 6.80 | 12.98 | vs |
| 15.78 | 5.61 | w |
| 20.48 | 4.33 | m |
| 24.98 | 3.56 | w |
| 27.35 | 3.26 | m |
| 31.34 | 2.85 | w |
| 31.85 | 2.81 | w |
| 32.27 | 2.77 | m |
| 33.89 | 2.64 | w |
| 34.37 | 2.61 | w |

### Example 6

### UZSi-9

Cabosil® (5.68 g) was added to a stirring mixture of 43.98 g Na₂CO₃ dissolved in 100 g of de-ionized H₂O. When the addition was complete a solution of 9.67 g ZrOCl₂•8H₂O dissolved in 20 g of de-ionized H₂O was added to the stirring SiO₂/Na₂CO₃ solution with a dropping funnel over approximately a 10 minute period. The resulting white gel was homogenized in a blender for 3 minutes, divided into several portions, transferred to Teflon® lined Parr reactors and reacted at 200 °C for 3, 7 and 10 days. At the end of the reaction time, the mixtures were vacuum filtered, and the solids were washed with deionized water and dried in air. The X-ray powder diffraction pattern of the sample heated at 200°C for 3 days showed the product to be UZSi-9 without any crystalline impurities. The characteristic X-ray data of UZSi-9 are presented in Table 6. Scanning Electron Microscopy (SEM) of a portion of the sample, including EDAX of a crystal indicated the presence of zirconium, and silicon framework elements. Chemical analysis of this product indicated the presence of 13.50 wt.% Na, 22.7 wt.% Si, 24.5 wt.% Zr with an LOI of 11.6 wt.%, giving a product of the composition Na_{2.19}ZrSi _{3.01}O _{9.11} • 2.71 H₂O. The products obtained from the other reaction conditions were found to have substantially the same X-ray diffraction pattern as that of Table 6.

**Table 6**

| 2-θ | d(Å) | I |
|---|---|---|
| 12.12 | 7.30 | w |
| 13.98 | 6.33 | m |
| 15.65 | 5.66 | s |
| 19.79 | 4.48 | w |
| 23.27 | 3.82 | w |
| 24.31 | 3.66 | w |
| 26.30 | 3.39 | m |
| 29.00 | 3.08 | vs |
| 31.52 | 2.84 | w |
| 32.30 | 2.77 | m |
| 34.58 | 2.59 | w |
| 36.05 | 2.49 | w |
| 36.74 | 2.44 | w |
| 43.29 | 2.09 | m |
| 45.71 | 1.98 | m |
| 46.31 | 1.96 | m |
| 48.56 | 1.87 | w |

### Example 7

### UZSi-11

Fumed silica (25.3 g of Cabot M-5 Cabosil®) was added to a stirring solution of 189.02 g TMAOH, 27.29 g NaOH (Aldrich) and 57.29 g of deionized H₂O. When the addition was complete, a solution of 12.89 g ZrOCl₂•8H₂O (Aldrich 98%) dissolved in 70.0 g of de-ionized H₂O was added to the stirring SiO₂/Na-TMAOH solution. The resulting white gel was homogenized in a blender for 3 minutes, transferred to a polyethylene bottle and aged at room temperature for 24 hrs., then re-homogenized for 4 minutes in a blender. The resulting slurry was reacted with tumbled agitation in a Teflon® lined Parr reactor at 200°C for 7 days. After this time, the mixture was vacuum filtered, and the solid was washed with deionized water and dried in air. The X-ray powder diffraction pattern of the solid showed the product to be UZSi-11 without any crystalline impurities. The characteristic X-ray data of UZSi-11 are presented in Table 6. Scanning Electron Microscopy (SEM) of a portion of the sample, including EDAX of a crystal indicated the presence of zirconium, and silicon framework elements.

**Table 7**

| 2-θ | d(Å) | I |
|---|---|---|
| 13.76 | 6.43 | m |
| 14.90 | 5.94 | m |
| 15.12 | 5.86 | vs |
| 15.71 | 5.64 | m |
| 16.72 | 5.30 | w |
| 20.57 | 4.31 | m |
| 24.48 | 3.63 | w |
| 24.65 | 3.61 | w |
| 25.83 | 3.45 | m |
| 26.42 | 3.37 | w |
| 26.72 | 3.33 | w |
| 28.56 | 3.12 | s |
| 28.82 | 3.09 | m |
| 30.53 | 2.93 | m |
| 31.53 | 2.83 | m |
| 31.82 | 2.81 | m |
| 33.83 | 2.65 | w |
| 34.55 | 2.59 | w |
| 36.02 | 2.49 | w |
| 36.20 | 2.48 | w |
| 37.38 | 2.40 | w |
| 41.01 | 2.20 | m |
| 42.95 | 2.10 | w |
| 44.43 | 2.04 | w |
| 46.54 | 1.95 | w |
| 48.08 | 1.89 | w |

### Example 8

### Nb-UZSi-1

A solution (60.08 g) of colloidal silica (DuPont Corp. identified as Ludox® AS-40) was slowly added over a period of 15 minutes to a stirring solution of 64.52 g of KOH dissolved in 224 g deionized H₂O. This was followed by the addition of 45.61 g zirconium acetate (Aldrich 15-16 wt% Zr, in dilute acetic acid). When this addition was complete, 4.75 g hydrous Nb₂O₅ (30 wt% LOI) was added and stirred for an additional 5 minutes. The resulting gel was transferred to a stirred autoclave reactor and hydrothermally treated for 1 day at 200°C. After this time, the reactor was cooled to room temperature, the mixture was vacuum filtered, the solid washed with deionized water and dried in air.

The solid reaction product was analyzed and found to contain 20.3 wt%Si, 15.6 wt%Zr, 20.2 wt% K, 6.60 wt% Nb, LOI 9.32 wt%, which give a formula of K_{2.14}Zr_{0.71}Nb_{0.29}Si₃O_{9.2}•2.32 H₂O. Scanning Electron Microscopy (SEM) of a portion of the sample, including EDAX of a crystal, indicated the presence of niobium, zirconium, and silicon framework elements. The X-ray powder diffraction pattern of the product, which contained no crystalline impurities, was characterized by the data displayed in Table 8.

**Table 8**

| 2-Theta | d(Å) | I |
|---|---|---|
| 10.93 | 8.09 | m |
| 13.37 | 6.62 | m |
| 15.09 | 5.87 | S |
| 16.52 | 5.36 | w |
| 17.33 | 5.11 | m |
| 18.27 | 4.85 | w |
| 20.20 | 4.39 | m |
| 21.91 | 4.05 | m |
| 22.33 | 3.98 | w |
| 24.83 | 3.58 | m |
| 25.22 | 3.53 | m |
| 26.98 | 3.30 | m |
| 28.98 | 3.08 | m |
| 29.70 | 3.01 | vs |
| 30.42 | 2.94 | m |
| 31.15 | 2.87 | s |
| 32.13 | 2.78 | m |
| 33.32 | 2.69 | w |
| 34.53 | 2.60 | w |
| 34.85 | 2.57 | m |
| 35.52 | 2.53 | m |
| 36.97 | 2.43 | m |
| 37.24 | 2.41 | w |
| 37.96 | 2.37 | w |
| 38.65 | 2.33 | w |

### Example 9

### Ge-UZSi-1

GeO₂ (44.62 g) was slowly added to a stirring solution of 30.50 g of KOH dissolved in 140 g deionized H₂O. After the addition was complete, 45.82 g ZrOCl₂•8H₂O dissolved in 140 g deionized H₂O was added drop-wise. The resulting gel was transferred to a stirred autoclave reactor and hydrothermally treated for 1 days at 200°C. After this time, the reactor was cooled to room temperature and the mixture was vacuum filtered, the solid was washed with deionized water and dried in air.

The solid reaction product was analyzed and found to contain 41.0 wt% Ge, 18.4 wt% Zr, 12.0 wt% K, , LOI 6.39 wt%, which gave a formula of K_{1.52}ZrGe_{2.80}O_{8.36}•1.84H₂O. The X-ray powder diffraction pattern of the product, which contained no crystalline impurities, was characterized by the data displayed in Table 9.

**Table 9**

| 2-Theta | d(Å) | I |
|---|---|---|
| 10.75 | 8.22 | m |
| 13.02 | 6.79 | m |
| 14.71 | 6.02 | m |
| 15.58 | 5.68 | w |
| 16.10 | 5.50 | w |
| 17.10 | 5.18 | w |
| 17.70 | 5.01 | w |
| 18.31 | 4.84 | w |
| 19.68 | 4.51 | w |
| 21.37 | 4.15 | m |
| 21.91 | 4.05 | w |
| 24.01 | 3.70 | w |
| 24.56 | 3.62 | w |
| 24.87 | 3.58 | w |
| 26.12 | 3.41 | w |
| 26.57 | 3.35 | m |
| 27.39 | 3.25 | w |
| 27.52 | 3.24 | w |
| 28.49 | 3.13 | m |
| 28.84 | 3.09 | vs |
| 29.61 | 3.01 | m |
| 30.14 | 2.96 | m |
| 30.31 | 2.95 | m |
| 31.18 | 2.87 | w |
| 31.39 | 2.85 | m |
| 32.36 | 2.76 | m |
| 33.70 | 2.66 | m |
| 33.98 | 2.64 | w |
| 34.74 | 2.58 | w |
| 35.17 | 2.55 | w |
| 36.10 | 2.49 | m |
| 36.74 | 2.44 | w |
| 36.96 | 2.43 | m |
| 37.37 | 2.40 | m |
| 38.73 | 2.32 | w |
| 39.17 | 2.30 | w |
| 40.69 | 2.22 | w |
| 42.47 | 2.13 | w |
| 43.94 | 2.06 | w |

### Example 10

### (Ge-UZSi-2 )

GeO₂ (10.63 g) was slowly added to a stirring solution of 43.7 g of KOH dissolved in 100 g deionized H₂O. After stirring for 5 minutes, 10.91 g ZrOCl₂•8H₂O dissolved in 100 g deionized H₂O was added drop-wise. The resulting slurry was homogenized in a blender for 3 minutes, divided into several portions, transferred to Teflon® lined Parr reactors and reacted at 150°C for 1,5,7 days, 200°C for 1,5,7 days. After hydrothermal treatment, the reactors were cooled to room temperature and the mixtures were vacuum filtered, the solids were washed with deionized water and dried in air.

Scanning Electron Microscopy (SEM) of a portion of the product from the 200°C for 7 days sample, including EDAX of a crystal indicated the presence of zirconium, and germanium as framework elements. A similar reaction product can be synthesized from hydrothermal treatment at 150-200°C for 1-7 days.. The X-ray powder diffraction pattern of the product, which contained an approximate 30% crystalline impurities, was characterized by the data displayed in Table 10.

**Table 10**

| 2-Theta | d(Å) | I |
|---|---|---|
| 7.26 | 12.17 | m |
| 14.16 | 6.25 | w |
| 20.16 | 4.40 | m |
| 20.65 | 4.30 | m |
| 28.00 | 3.18 | m |
| 29.46 | 3.03 | m |
| 29.70 | 3.01 | vs |
| 30.14 | 2.96 | s |
| 31.41 | 2.85 | m |
| 32.24 | 2.77 | m |
| 34.52 | 2.60 | w |
| 36.25 | 2.48 | w |
| 37.10 | 2.42 | w |
| 38.27 | 2.35 | w |
| 39.05 | 2.30 | w |
| 40.93 | 2.20 | w |
| 41.96 | 2.15 | w |
| 43.34 | 2.09 | w |
| 43.71 | 2.07 | w |
| 44.40 | 2.04 | w |

### Example 11

### (Rb-UZSi-1)

A solution was prepared by mixing 3.22 g of colloidal silica and a solution of 76.33 g 50 wt.% RbOH (50 wt% RbOH, 50 wt% H₂O, Aldrich). To the resulting gel, 5.46 g ZrOCl₂•8H₂O (Aldrich 98%) dissolved in 67.0 g of deionized water was slowly added dropwise. The resulting gel was transferred to a stainless steel blender, homogenized for four minutes, divided into two portions which were transferred to Teflon® lined Parr reactors and hydrothermally reacted for 1 and 7 days at 200°C. The reactors were cooled to room temperature and the mixtures were vacuum filtered to isolate solids which were washed with deionized water and dried in air.

The X-ray powder diffraction pattern of the product at 200°C and 7 days was characterized by the data displayed in Table 11. A similar reaction product can be synthesized from hydrothermal treatment at 150-200°C for 1-7 days.

**Table 11**

| 2-θ | d(Å) | I |
|---|---|---|
| 10.78 | 8.20 | m |
| 13.26 | 6.67 | m |
| 14.90 | 5.94 | m |
| 17.06 | 5.19 | m |
| 18.08 | 4.90 | w |
| 18.28 | 4.85 | w |
| 19.96 | 4.44 | s |
| 24.55 | 3.58 | m |
| 26.48 | 3.36 | m |
| 28.46 | 3.13 | w |
| 29.32 | 3.04 | vs |
| 29.98 | 2.98 | m |
| 30.70 | 2.91 | s |
| 31.74 | 2.82 | w |
| 34.12 | 2.63 | w |
| 35.00 | 2.56 | w |
| 36.36 | 2.47 | w |
| 37.18 | 2.42 | w |
| 37.54 | 2.39 | w |
| 39.80 | 2.26 | w |
| 40.54 | 2.22 | w |

### Example 12

A sample of UZSi-1 from Example 1 was tested for its ability to remove ammonium ions in the presence of mono and divalent metal cations. A sample of zeolite W (obtained from UOP) was tested for comparison. In a container 20.16 g of the potassium form of zeolite W or 19.00 g of UZSi-1 were contacted with 500 ml of an aqueous solution having a pH of 8.0 and containing the ions in Table 8.

**Table 12**

| **Concentration of Ions in Test Solution** | | | | | |
|---|---|---|---|---|---|
| Ion | NH₄⁺ | Na⁺ | K⁺ | Ca⁺² | Mg⁺² |
| Concentration (mg/L) | 880 | 2640 | 660 | 2640 | 440 |

This test solution simulates a secondary wastewater treatment effluent. The mixture of molecular sieve and aqueous solution was shaken on a wrist-action shaker for 16 hours at which point the solution was replaced with fresh solution and shaking resumed. This procedure was carried out for a total of 10 times to ensure equilibrium was reached. After the test was completed, the solid was isolated and analyzed for ammonium ion concentration by ion chromatography and for Na⁺, K⁺, Ca⁺² and Mg⁺² concentration by Atomic Absorption spectroscopy.

Table 13 presents the ammonium, calcium and magnesium capacity and selectivity in units of millequivalents of cation per gram of molecular sieve.

**Table 13**

| **Cation Capacity and Ammonium Selectivity for Zeolite W and UZSi-1** | | |
|---|---|---|
| **Parameter** | **Zeolite W** | **UZSi-1** |
| NH₄⁺ capacity | 1.93 | 1.94 |
| Ca⁺² capacity | 1.12 | 0.10 |
| Mg⁺² capacity | 0.19 | 0.14 |
| NH₄⁺ selectivity* | 1.5 | 16.5 |

| | | |
|---|---|---|
| *NH₄⁺ selectivity = (NH₄⁺ capacity)/(Ca⁺² + Mg⁺² capacity) | | |

## Claims

1. An adsorption process for removing ammonium ions from an aqueous stream comprising contacting the stream with a molecular sieve for a time sufficient to exchange the ammonium ion for an exchangeable cation on the molecular sieve, the molecular sieve **characterized in that** it has a microporous framework structure containing at least ZrO₃ octahedral units and at least one of SiO₂ tetrahedral units and GeO₂ tetrahedral units and an empirical formula on an anhydrous and as synthesized basis of:
Aₚ Mₓ Zr ₁₋ₓ Si _{n-y} Ge_{y} Oₘ
where A is an exchangeable cation selected from the group consisting of potassium ion, sodium ion, rubidium ion, cesium ion, or mixtures thereof, M is at least one framework metal selected from the group consisting of hafnium (4+), tin (4+), niobium (5+), titanium (4+), cerium (4+), germanium (4+), praseodymium (4+), and terbium (4+), "p" has a value from 1 to 6, "x" has a value from zero to less than 1, "n" has a value from 2 to 4, "y" has a value from 0 to 4, "m" has a value from 7 to 12, the molecular sieve **characterized in that** it has pores of less than 7.5 Å.

2. The adsorption process of Claim 1 where the process is a batch process.

3. The adsorption process of Claim 1 where the process is a continuous process.

4. The adsorption process of Claims 1, 2 or 3 where the molecular sieve has a x-ray powder diffraction pattern which contains at least the d-spacings and intensities of one of Tables A to G.

5. The adsorption process of any one of Claims 1 to 4 where "y" has a value of 4.

## Patentansprüche

1. Adsorptionsverfahren für das Entfernen von Ammoniumionen von einem wässrigen Strom, umfassend das Kontaktieren des Stroms mit einem Molekularsieb für eine Zeit, die ausreicht, um das Ammoniumion für ein austauschbares Kation an dem Molekularsieb auszutauschen, wobei das Molekularsieb **dadurch gekennzeichnet ist, dass** es eine mikroporenhaltige Rahmenstruktur aufweist, die mindestens oktaedrische ZrO₃-Einheiten und mindestens eine von tetraedrischen SiO₂-Einheiten und tetraedrischen GeO₂-Einheiten und eine empirische Formel auf wasserfreier und synthetisierter Basis von:
Ap Mₓ Zr ₁₋ₓ Si _{n-y} Ge_{y} Oₘ
aufweist, wobei A ein austauschbares Kation ist ausgewählt aus der Gruppe bestehend aus einem Kaliumion, Natriumion, Rubidiumion, Cäsiumion oder Mischungen derselben, M mindestens ein Rahmenmetall ist ausgewählt aus der Gruppe bestehend aus Hafnium (4+), Zinn (4+), Niob (5+), Titan (4+), Cer (4+), Germanium (4+), Praseodym (4+) und Terbium (4+), "p" einen Wert von 1 bis 6, "x" einen Wert von null bis weniger als 1, "n" einen Wert von 2 bis 4, "y" einen Wert von 0 bis 4, "m" einen Wert von 7 bis 12 aufweist, wobei das Molekularsieb **dadurch gekennzeichnet ist, dass** es Poren von weniger als 7,5 Å aufweist.

2. Adsorptionsverfahren nach Anspruch 1, wobei das Verfahren ein chargenweises Verfahren ist.

3. Adsorptionsverfahren nach Anspruch 1, wobei das Verfahren ein kontinuierliches Verfahren ist.

4. Adsorptionsverfahren nach den Ansprüchen 1, 2 oder 3, wobei das Molekularsieb ein Röntgenpulverbeugungsdiagramm aufweist, das mindestens d-Abstände und Intensitäten einer der Tabellen A bis G aufweist.

5. Adsorptionsverfahren nach einem der Ansprüche 1 bis 4, wobei "y" einen Wert von 4 aufweist.

## Revendications

1. Procédé d'adsorption en vue de l'élimination des ions ammonium d'un courant aqueux comprenant la mise en contact du courant avec un tamis moléculaire pendant une période de temps suffisante à échanger l'ion ammonium pour un cation échangeable sur le tamis moléculaire, le tamis moléculaire étant **caractérisé en ce qu'**il possède une structure cadre micro-poreuse contenant au moins des unités octaédriformes de ZrO₃ et au moins un des unités tétraédriques de SiO₂ et des unités tétraédriques de GeO₂ et une formule, empirique sur une base anhydre, et telle qu'obtenu après synthèse, de:
Aₚ Mₓ Zr ₁₋ₓ Si _{n-y} Ge_{y} Oₘ
où A est un cation échangeable sélectionné parmi le groupe constitué d'un ion potassium, d'un ion sodium, d'un ion rubidium, d'un ion césium ou de mélanges de ces derniers, M est au moins un métal cadre sélectionné parmi le groupe constitué du hafnium (4+), de l'étain (4+), du niobium (5+), du titane (4+), du cérium (4+), du germanium (4+), du praséodyme (4+), et du terbium (4+), "p" a une valeur allant de 1 à 6, "x" a une valeur allant de zéro à moins de 1, "n" a une valeur allant de 2 à 4, "y" a une valeur allant de 0 à 4, "m" a une valeur allant de 7 à 12, le tamis moléculaire étant **caractérisé en ce qu'**il possède des pores de moins de 7,5 Å.

2. Procédé d'adsorption selon la revendication 1, où le procédé est un procédé par lot.

3. Procédé d'adsorption selon la revendication 1, où le procédé est un procédé en mode continu.

4. Procédé d'adsorption selon les revendications 1, 2 ou 3, où le tamis moléculaire a un diagramme de diffraction en poudre aux rayons X qui contient au moins les écartements d et les intensités de l'un des tableaux A à G.

5. Procédé d'adsorption selon l'une quelconque des revendications 1 à 4, où "y" a une valeur de 4.
